# EUROPEAN PATENT SPECIFICATION

(11) **EP 3 951 358 B1**
(45) Date of publication and mention of the grant of the patent: **17.07.2024**
(21) Application number: 20776598.3
(22) Date of filing: 10.02.2020
(51) Int. Cl.: G01N 21/3581, B42D 25/30, G07D 7/121, G01N 21/21, B42D 25/29, G07D 7/06

(54) **ELECTROMAGNETIC WAVE DETECTION DEVICE, MEDIA HANDLING DEVICE, AND ELECTROMAGNETIC WAVE DETECTION METHOD**
VORRICHTUNG ZUR DETEKTION ELEKTROMAGNETISCHER WELLEN, MEDIENHANDHABUNGSVORRICHTUNG UND VERFAHREN ZUR DETEKTION ELEKTROMAGNETISCHER WELLEN
DISPOSITIF DE DÉTECTION D'ONDES ÉLECTROMAGNÉTIQUES, DISPOSITIF DE MANIPULATION DE SUPPORTS D'INFORMATION ET PROCÉDÉ DE DÉTECTION D'ONDES ÉLECTROMAGNÉTIQUES

(30) Priority: 25.03.2019 JP 2019056812
(43) Date of publication of application: 09.02.2022
(73) Proprietor: GLORY LTD., Himeji-shi Hyogo 670-8567 (JP)
(72) Inventor: SHIMIZU, Hayato, Himeji-shi, Hyogo 670-8567 (JP); MUTA, Keitaro, Himeji-shi, Hyogo 670-8567 (JP)
(74) Representative: SSM Sandmair
(86) International application number: PCT/JP2020/005067
(87) International publication number: WO 2020/195245

(56) References cited:
- EP-A1- 3 208 605
- WO-A1-2011/077949
- WO-A1-2013/046249
- WO-A1-2016/031181
- CA-A1- 3 018 059
- JP-A- 2000 171 416
- JP-A- 2009 058 310
- JP-A- 2015 137 913
- JP-A- 2016 080 452
- JP-A- 2016 141 065
- JP-A- 2017 134 039
- JP-A- 2018 036 190
- US-A1- 2007 228 280
- US-A1- 2008 013 071
- US-A1- 2012 262 190

## Description

### TECHNICAL FIELD

The present invention relates to electromagnetic wave detection devices, medium handling devices, and methods of detecting electromagnetic waves. Specifically, the present invention relates to an electromagnetic wave detection device that transmits and receives terahertz electromagnetic waves for detection of a characteristic of a medium, a medium handling device, and a method of detecting electromagnetic waves.

### BACKGROUND ART

In various fields, techniques of irradiating an object with rays such as terahertz electromagnetic waves have been used to examine the material, structure, and other characteristics. For example, Patent Literature 1 discloses an inspection device that generates and detects terahertz electromagnetic waves with a plurality of photoconductive elements arrayed. The terahertz electromagnetic waves generated by the photoconductive elements in the generation side are collected by a parabolic reflector and applied to the object to be inspected. Then, the terahertz electromagnetic waves reflected by the object to be inspected are collected by another parabolic reflector and detected by the photoconductive elements in the detection side. Patent Literature 2 discloses a device that detects terahertz electromagnetic waves that has been applied to an object and passed through the object.

### CITATION LIST

### - Patent Literature

Patent Literature 1: JP 5144175
Patent Literature 2: WO 2013/046249

WO 2016/031181 A1 relates to an inspection apparatus and an inspection method for detecting foreign substances using a terahertz wave.
US 2007/228280 A1 relates to identifying objects in a container by transmitting radiation from two THz-lasers through the container.
CA 3 018 059 A1 relates to a counterfeit prevention structure capable of preventing counterfeiting and a counterfeit prevention medium including the counterfeit prevention structure.
US 2012/262190 A1 relates to a method for measuring characteristics of an object to be measured, the method including holding the object on a void-arranged structure, applying electromagnetic waves to the void-arranged structure on which the object is held, and detecting the electromagnetic waves transmitted through the void-arranged structure to measure the characteristics of the object.
EP 3 208 605 A1 relates to an inspection device using THz band and capable of easily detecting foreign matter adhering to a specimen.

### SUMMARY OF INVENTION

### - Technical Problem

However, it may take time and effort to examine the characteristics of the object using the techniques above. For example, determination of whether or not the transmittance differs depending on the polarization direction of the terahertz electromagnetic waves applied requires measuring the transmittance of the terahertz electromagnetic waves polarized in a predetermined direction, and then measuring the transmittance of terahertz electromagnetic waves polarized in different directions.

The present invention was made in view of the current state of the art, and aims to provide an electromagnetic wave detection device, a medium handling device, and a method of detecting electromagnetic waves, each of which enables easy detection of a characteristic of an object under a plurality of terahertz electromagnetic waves having different properties.

### - Solution to Problem

In order to solve the above issue and to achieve the object, one aspect of the present invention is directed to an electromagnetic wave detection device as defined in claim 1.

In another aspect of the present invention, the transmission unit is configured to irradiate the detection region with the first terahertz electromagnetic waves and the second terahertz electromagnetic waves at different timings.

In another aspect of the present invention, the transmission unit is configured to irradiate the detection region with the first terahertz electromagnetic waves and the second terahertz electromagnetic waves simultaneously.

In another aspect of the present invention, the condensing unit is an ellipsoidal reflector configured to collect the first terahertz electromagnetic waves and the second terahertz electromagnetic waves.

In another aspect of the present invention, the detection region has a size capable of including at least one resonator provided in a medium.

In another aspect of the present invention, the electromagnetic wave detection device further includes a transport unit configured to transport a medium along a transport path,
wherein the transmission unit is configured to irradiate a transported medium with the first terahertz electromagnetic waves and the second terahertz electromagnetic waves.

In another aspect of the present invention, a plurality of pairs of detection units, each of the pairs formed by the transmission unit and the reception unit, is arranged in a width direction of the transport path.

Another aspect of the present invention is directed to a medium handling device including the electromagnetic wave detection device.

Another aspect of the present invention is directed to a method of detecting electromagnetic waves that detects a characteristic of a medium by irradiating the medium with terahertz electromagnetic waves, as defined in claim 11. electromagnetic waves that have passed through the detection region.

### - Advantageous Effects of Invention

The electromagnetic wave detection device, the medium handling device, and the method of detecting electromagnetic waves of the present invention can easily detect a characteristic of an object under a plurality of terahertz electromagnetic waves having different polarization directions.

### BRIEF DESCRIPTION OF DRAWINGS

FIG. 1 is a schematic perspective view of an electromagnetic wave detection device according to Embodiment 1.
FIG. 2 is a schematic side view of the electromagnetic wave detection device according to Embodiment 1.
FIG. 3 is a schematic front view of the electromagnetic wave detection device according to Embodiment 1.
FIGs. 4(a) and 4(b) are schematic views of a first optical system and a second optical system in the electromagnetic wave detection device according to Embodiment 1. FIG. 4(a) is a cross-sectional view of the first and second optical systems. FIG. 4(b) shows the positional relationship between the first and second optical systems.
FIG. 5 is a schematic cross-sectional view showing the arrangement of the optical systems in the electromagnetic wave detection device according to Embodiment 1.
FIG. 6 is a functional block diagram of the electromagnetic wave detection device according to Embodiment 1.
FIG. 7 shows an example of frequency characteristics relative to transmittances obtained by irradiating a region including SRRs with terahertz electromagnetic waves.
FIG. 8 shows an example of examining the transmission characteristics of terahertz electromagnetic waves.
FIG. 9 shows another example of examining the transmission characteristics of terahertz electromagnetic waves.
FIG. 10 is a functional block diagram of a medium handling device according to Embodiment 1.
FIG. 11 is a schematic front view of an electromagnetic wave detection device according to a modified embodiment.
FIG. 12 is a schematic front view of an electromagnetic wave detection device according to an example not falling under the invention
FIG. 13 is a schematic top view of an electromagnetic wave detection device according to yet another modified embodiment.

### DESCRIPTION OF EMBODIMENTS

Hereinafter, the electromagnetic wave detection device, the medium handling device, and the method of detecting electromagnetic waves of the present invention are described in detail with reference to the attached drawings. The methods of generating and detecting terahertz electromagnetic waves with photoconductive elements using femtosecond laser light are known as conventional techniques as described in the patent literatures cited in BACKGROUND ART above. Therefore, detailed description of the generation and detection of terahertz electromagnetic waves is omitted. Mainly described here is the configuration of the electromagnetic wave detection device for the process from irradiation of a medium with terahertz electromagnetic waves emitted by the transmission elements to detection of the terahertz electromagnetic waves by the reception elements.

In the present embodiment, a case is described, as an example, where the electromagnetic wave detection device detects the characteristics of a sheet-like medium such as a banknote, check, or voucher appearing when the medium is irradiated with terahertz electromagnetic waves. A sheet-like medium whose characteristics are to be detected includes a resonance structure in which a large number of resonators of terahertz electromagnetic waves are arranged. In the present embodiment, the electromagnetic wave detection device irradiates the sheet-like medium with polarized terahertz electromagnetic waves and detects the terahertz electromagnetic waves that have passed through the medium. When the sheet-like medium is irradiated with the terahertz electromagnetic waves, the transmittance of the terahertz electromagnetic waves in the region including the resonance structure changes depending on the structure of the resonance structure. The change can be detected as a characteristic of the sheet-like medium and used as a security feature to determine the authenticity of the sheet-like medium. The resonance structure may be attached to the sheet-like medium or formed directly on the sheet-like medium. Hereinafter, the electromagnetic wave detection device is described in detail using as an example a case where the characteristics of a sheet-like medium (hereinafter, simply referred to as a "medium") are detected based on the transmittances of the terahertz electromagnetic waves.

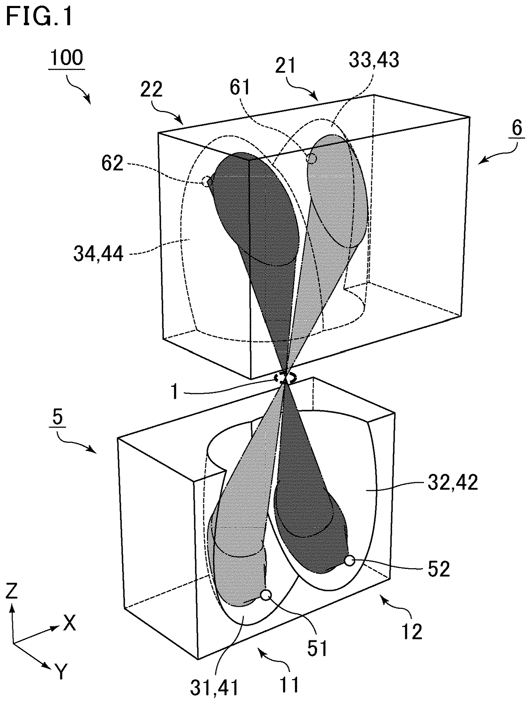

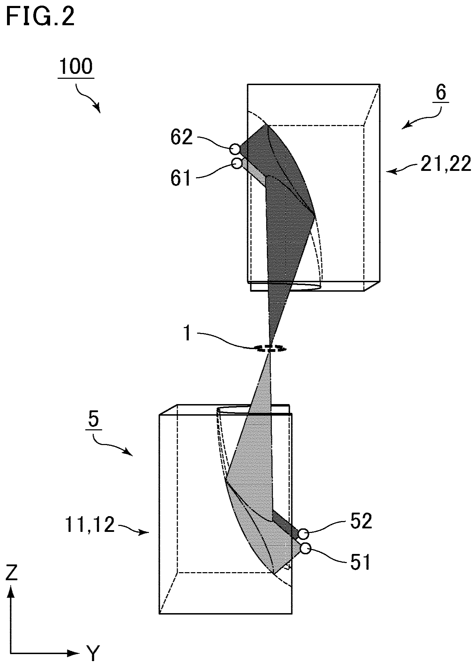

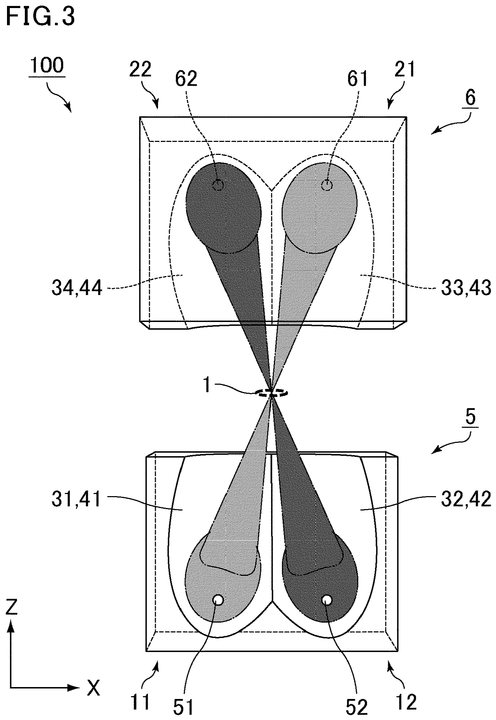

As shown in FIGs. 1 to 3, an electromagnetic wave detection device 100 of the present embodiment includes a first transmission unit 11 that irradiates a detection region 1 with first terahertz electromagnetic waves having a first property; a second transmission unit 12 that irradiates the detection region 1 with second terahertz electromagnetic waves having a second property different from the first property; a first reception unit 21 that receives the first terahertz electromagnetic waves that have passed through the detection region 1; and a second reception unit 22 that receives the second terahertz electromagnetic waves that have passed through the detection region 1. The first transmission unit 11 and the second transmission unit 12 irradiate the detection region 1 with the first terahertz electromagnetic waves and the second terahertz electromagnetic waves, respectively, from directions different from each other. In this structure, when the transmission characteristics of a medium under a plurality of terahertz electromagnetic waves having different properties are examined, the first transmission unit 11 and the second transmission unit 12 can irradiate almost the same portion of the medium, transported in such a manner that the medium overlaps the detection region 1, with the first terahertz electromagnetic waves and the second terahertz electromagnetic waves that have different properties from each other, respectively. This enables easy detection of the characteristics of the medium (resonance structure) under a plurality of terahertz electromagnetic waves having different properties. Also, since the characteristics of almost the same portion of the medium can be detected, it is possible to prevent detection of different portions of the object under the plurality of terahertz electromagnetic waves due to a positional shift in transportation. Thus, the detection accuracy of the resonance structure can be improved. In addition, the device can be miniaturized as compared with the cases of irradiating different detection regions with the plurality of terahertz electromagnetic waves.

The method of detecting electromagnetic waves of the present embodiment also can achieve the above effect since the method includes irradiating the same detection region 1 with the first terahertz electromagnetic waves and the second terahertz electromagnetic waves and receiving the first terahertz electromagnetic waves and the second terahertz electromagnetic waves that have passed through the detection region 1.

The optical axis of the first terahertz electromagnetic waves and the optical axis of the second terahertz electromagnetic waves intersect each other in the detection region 1. This structure can be achieved by, for example, placing the second reception unit 22 above (or below) the first transmission unit 11 and placing the first reception unit 21 above (or below) the second transmission unit 12.

The electromagnetic wave detection device 100 includes a detection unit 5 defined by the first transmission unit 11 and the second transmission unit 12, and a detection unit 6 defined by the first reception unit 21 and the second reception unit 22. This pair of detection units 5 and 6 is arranged such that the detection unit 5 faces one main surface of a medium and the detection unit 6 faces the other main surface of the medium. The medium is transported in the X-axis direction or the Y-axis direction between the detection units 5 and 6, in the state of being parallel to the XY plane.

The first transmission unit 11 and the second transmission unit 12 respectively transmit the first terahertz electromagnetic waves having a predetermined frequency and the second terahertz electromagnetic waves having a predetermined frequency to the medium at respective constant intensities. The terahertz electromagnetic waves transmitted by the transmission units 11 and 12 are applied to the transported medium and the resonance structure of the medium.

The first reception unit 21 and the second reception unit 22 respectively receive the first terahertz electromagnetic waves and the second terahertz electromagnetic waves that have passed through the medium and the resonance structure of the medium and detect the intensities of the electromagnetic waves. The reception units 21 and 22 each can calculate the transmittance of the received terahertz electromagnetic waves using the ratio of the intensity of the terahertz electromagnetic waves that have passed through the medium to the intensity of the terahertz electromagnetic waves detected without the medium. The transmittances may be calculated by the reception units 21 and 22 or by the later-described control unit. In the case where the control unit calculates the transmittances, each of the reception units 21 and 22 outputs the intensity of the received terahertz electromagnetic waves, so that the control unit calculates the transmittances.

The first reception unit 21 and the second reception unit 22 may respectively apply the first terahertz electromagnetic waves and the second terahertz electromagnetic waves at different timings. Still, the first transmission unit 11 and the second transmission unit 12 preferably respectively irradiate the detection region 1 with the first terahertz electromagnetic waves and the second terahertz electromagnetic waves simultaneously. This enables irradiation of the same portion of the transported medium with the first terahertz electromagnetic waves and the second terahertz electromagnetic waves, further improving the detection accuracy of the resonance structure of the transported medium.

The first transmission unit 11 and the second transmission unit 12 respectively include a first condensing unit 31 and a second condensing unit 32 that respectively collect the first terahertz electromagnetic waves and the second terahertz electromagnetic waves to the detection region 1. This enables detection of the characteristics of a narrow region on the medium.

Thus, the first focal point of the first optical system, which transmits and receives the first terahertz electromagnetic waves, and the second focal point of the second optical system, which transmits and receives the second terahertz electromagnetic waves, are provided in the same region, i.e., the detection region 1. The expression "the first focal point and the second focal point are provided in the same region" means that they may be provided at substantially the same position or in the vicinity of each other. In the latter case, the distance between the centers of these two focal points is 1 mm or shorter, for example.

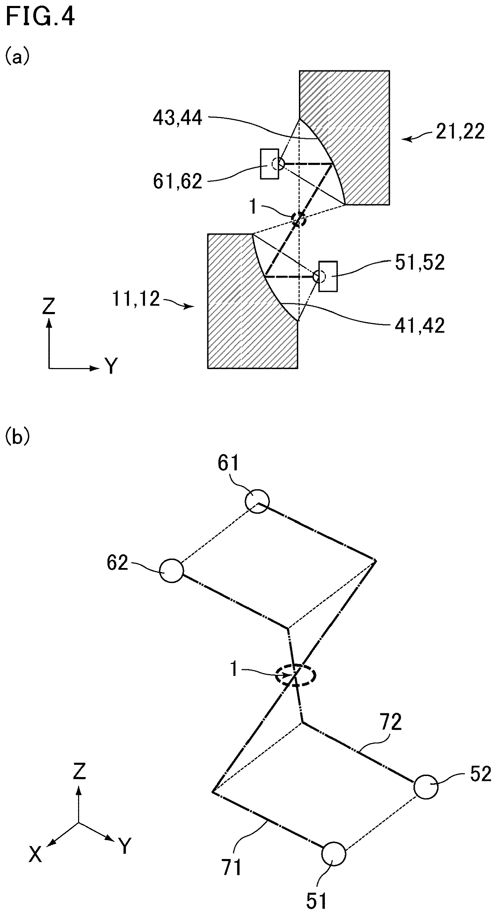

As shown in FIGs. 4(a) and 4(b), in the electromagnetic wave detection device 100, the first optical system (first optical axis 71) and the second optical system (second optical axis 72) intersect each other three-dimensionally such that the first focal point and the second focal point are provided in the same region (detection region 1). In addition, since the two optical systems are defined by the pair of detection units 5 and 6, the device can be miniaturized.

Preferably, the first condensing unit 31 and the second condensing unit 32 are respectively a first ellipsoidal reflector 41 that collects the first terahertz electromagnetic waves and a second ellipsoidal reflector 42 that collects the second terahertz electromagnetic waves. This enables the first transmission unit 11 and the second transmission unit 12 to respectively effectively collect the first terahertz electromagnetic waves and the second terahertz electromagnetic waves to the detection region 1.

The first terahertz electromagnetic waves and the second terahertz electromagnetic waves collected to the detection region 1 are in the form of beams in the detection region 1. Each beam diameter in the detection region 1 in terms of the full width at half maximum is about 1 mm to 5 mm. The beam diameters can be set to any values depending on the object to be detected.

The size of the detection region 1 can be set to any size depending on the object to be detected. The size is preferably capable of including at least one resonator in the resonance structure provided to the medium, more preferably capable of including 10 or more of such resonators.

According to the invention, the first and second properties are polarization characteristics. The first terahertz electromagnetic waves are light polarized in the first polarization direction in the detection region 1, and the second terahertz electromagnetic waves are light polarized in the second polarization direction different from the first polarization direction in the detection region 1. Specifically, the first terahertz electromagnetic waves are light polarized in the X-axis direction in the XY plane shown in FIGs. 1 to 4 in the detection region 1, and the second terahertz electromagnetic waves are light polarized in the Y-axis direction in the XY plane shown in FIGs. 1 to 4 in the detection region 1.

The first transmission unit 11 includes a first transmission element 51 and the second transmission unit 12 includes a second transmission element 52. The first transmission element 51 transmits terahertz electromagnetic waves polarized in the direction perpendicular to a straight line connecting the center of the detection region 1 and the emission point of the first transmission element 51 in the XZ plane. The second transmission element 52 transmits terahertz electromagnetic waves polarized in the direction parallel to a straight line connecting the center of the detection region 1 and the emission point of the second transmission element 52 in the XZ plane. The first condensing unit 31 and the second condensing unit 32 collect the terahertz electromagnetic waves to the detection region 1 by reflecting the terahertz electromagnetic waves emitted in the horizontal direction (Y-axis direction) by the first transmission element 51 and the second transmission element 52, respectively, such that the terahertz electromagnetic waves travel in a direction oblique to the vertical direction (Z-axis direction).

The first terahertz electromagnetic waves are transmitted in the Y-axis direction by the first transmission element 51 as terahertz electromagnetic waves polarized in the direction perpendicular to the straight line connecting the center of the detection region 1 and the emission point of the first transmission element 51 (polarized mainly in the X-axis direction) in the XZ-plane. The first terahertz electromagnetic waves are reflected in an oblique direction by the first condensing unit 31, and remains polarized in the same direction even after being reflected. This enables collection of the first terahertz electromagnetic waves polarized in the X-axis direction in the XY plane in the detection region 1 where the first terahertz electromagnetic waves pass through the medium.

The second terahertz electromagnetic waves are transmitted in the Y-axis direction by the second transmission element 52 as terahertz electromagnetic waves polarized in the direction parallel to the straight line connecting the center of the detection region 1 and the emission point of the second transmission element 52 (polarized mainly in the Z-axis direction) in the XZ plane. The second terahertz electromagnetic waves are reflected in an oblique direction by the second condensing unit 32. The reflected second terahertz electromagnetic waves become terahertz electromagnetic waves polarized mainly in the Y-axis direction. This enables collection of the second terahertz electromagnetic waves polarized in the Y-axis direction in the XY plane in the detection region 1 where the second terahertz electromagnetic waves pass through the medium.

The first reception unit 21 and the second reception unit 22 respectively include a third condensing unit 33 corresponding to the first condensing unit 31 and a fourth condensing unit 34 corresponding to the second condensing unit 32. The first reception unit 21 and the second reception unit 22 respectively include a first reception element 61 that receives terahertz electromagnetic waves polarized in the Z-axis direction and a second reception element 62 that receives terahertz electromagnetic waves polarized in the Y-axis direction.

The first terahertz electromagnetic waves, which have been emitted by the first transmission unit 11, have passed through the medium, and are travelling in a direction oblique to the vertical direction, are reflected by the third condensing unit 33 such that the first terahertz electromagnetic waves travel in the horizontal direction. The first terahertz electromagnetic waves are thus collected to the first reception element 61 of the first reception unit 21. This reflection does not change the polarization direction of the first terahertz electromagnetic waves. In other words, the polarization direction of a component such as a wire grid polarizer remains perpendicular to the straight line connecting the center of the detection region 1 and the emission point of the first transmission element 51 (remains polarized mainly in the X-axis direction) in the XZ plane. Thus, the first terahertz electromagnetic waves are received by the first reception element 61 that receives terahertz electromagnetic waves polarized in the same direction as the polarization direction of the first terahertz electromagnetic waves.

The second terahertz electromagnetic waves, which have been emitted by the second transmission unit 12, have passed through the medium, and are travelling in a direction oblique to the vertical direction, are reflected by the fourth condensing unit 34 such that the second terahertz electromagnetic waves travel in the horizontal direction. The second terahertz electromagnetic waves are thus collected to the second reception element 62 of the second reception unit 22. This reflection changes the polarization direction of the second terahertz electromagnetic waves to the direction opposite to the direction in which the second terahertz electromagnetic waves were reflected by the second transmission unit 12. In other words, the polarization direction, which was mainly the Y-axis direction in the YZ plane upon reflection by the second transmission unit 12, returns to the original polarization direction upon reflection by the second reception unit 22, i.e., to the direction parallel to the straight line connecting the center of the detection region 1 and the emission point of the second transmission element 52 (the state polarized mainly in the Z-axis direction). Thus, the second terahertz electromagnetic waves polarized in the original direction are received by the second reception element 62 that receives terahertz electromagnetic waves polarized in the same direction as the polarization direction of the second terahertz electromagnetic waves.

Preferably, the third condensing unit 33 and the fourth condensing unit 34 are respectively a third ellipsoidal reflector 43 that collects the first terahertz electromagnetic waves and a fourth ellipsoidal reflector 44 that collects the second terahertz electromagnetic waves. This enables the first reception unit 21 and the second reception unit 22 to respectively effectively collect the first terahertz electromagnetic waves to the first reception element 61 and the second terahertz electromagnetic waves to the second reception element 62.

For reflection of terahertz electromagnetic waves, each of the ellipsoidal reflectors 41, 42, 43, and 44 is formed from a conductive material such as aluminum. For example, a component made of a conductive metal material is shaved to form each of the ellipsoidal reflectors 41, 42, 43, and 44. Also, each of the ellipsoidal reflectors 41, 42, 43, and 44 can be formed by shaving a component formed from a non-conductive material such as resin and plating the component with a conductive metal material.

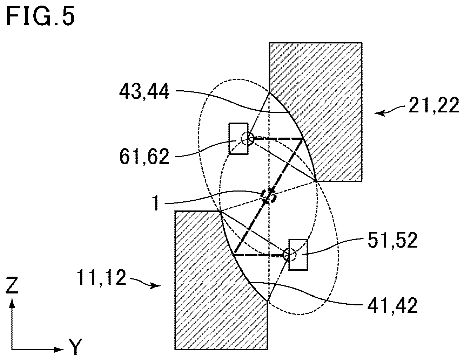

The mirror surface of each of the ellipsoidal reflectors 41, 42, 43, and 44 has a shape obtained by cutting part of the surface (the surface of a spheroid) of a solid of revolution (spheroid) which is obtained by rotating an ellipse (hereinafter, also referred to as a reference ellipse) about its long axis as the axis of rotation. As shown in FIG. 5, the emission point (transmission point) of the first transmission element 51 and the first focal point are provided at the respective two focal points of the reference ellipse corresponding to the first ellipsoidal reflector 41. The emission point (transmission point) of the second transmission element 52 and the second focal point are provided at the respective two focal points of the reference ellipse corresponding to the second ellipsoidal reflector 42. The light receiving point (reception point) of the first reception element 61 and the first focal point are provided at the respective two focal points of the reference ellipse corresponding to the third ellipsoidal reflector 43. The light receiving point (reception point) of the second reception element 62 and the second focal point are provided at the respective two focal points of the reference ellipse corresponding to the fourth ellipsoidal reflector 44.

The electromagnetic wave detection device 100 of the present embodiment may not include a polarizer in the case where each of the transmission elements 51 and 52 and the reception elements 61 and 62 has excellent polarization characteristics. Otherwise, a polarizer is preferably arranged at each of the following positions (1) to (4).
(1) Between the first transmission element 51 and the first condensing unit 31 (first ellipsoidal reflector 41)
(2) Between the second transmission element 52 and the second condensing unit 32 (second ellipsoidal reflector 42)
(3) Between the first reception element 61 and the third condensing unit 33 (third ellipsoidal reflector 43)
(4) Between the second reception element 62 and the fourth condensing unit 34 (fourth ellipsoidal reflector 44)

A polarizer is an optical element that transmits only light oscillating in a specific direction and blocks (reflects or absorbs) light oscillating in any other directions. Specific examples thereof include wire grid polarizers.

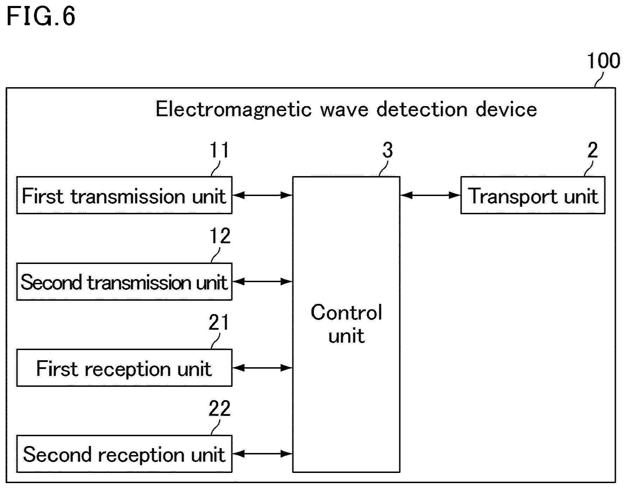

As shown in FIG. 6, the electromagnetic wave detection device 100 further includes a transport unit 2 that transports media within the device, and a control unit 3 that controls the first transmission unit 11, the second transmission unit 12, the first reception unit 21, the second reception unit 22, and the transport unit 2.

The transport unit 2 rotates a plurality of rollers or belts to transport media along the transport path in the X-axis or Y-axis direction. The first transmission unit 11 and the second transmission unit 12 respectively transmit the first terahertz electromagnetic waves and the second terahertz electromagnetic waves toward each medium transported by the transport unit 2.

The control unit 3 controls the transport unit 2 to transport the medium such that the medium passes between a region with the first transmission unit 11 and the second transmission unit 12 and a region with the first reception unit 21 and second reception unit 22. The control unit 3 controls each of the transmission units 11 and 12 to transmit terahertz electromagnetic waves having a predetermined frequency toward the medium. The control unit 3 controls each of the reception units 21 and 22 to receive the terahertz electromagnetic waves applied by the corresponding transmission unit 11 or 12 and having passed through the medium. The control unit 3, as described above, can detect the transmittance calculated based on the terahertz electromagnetic waves transmitted by the transmission unit 11 and the terahertz electromagnetic waves received by the reception unit 21, the transmittance calculated based on the terahertz electromagnetic waves transmitted by the transmission unit 12 and the terahertz electromagnetic waves received by the reception unit 22, and changes in transmittance, for example. For example, the control unit 3 outputs the detection results to an external device such as a recognition device that recognizes media. It is also possible to incorporate the electromagnetic wave detection device 100 shown in FIG. 1 into a medium handling device to use the medium handling device to recognize each medium and inspect the medium. The details thereof are described later.

Next, an example is described in which the electromagnetic wave detection device 100 is used to examine the transmission characteristics of a resonance structure formed from a metamaterial. Specifically, a case is described in which a metamaterial capable of functioning as a resonance structure includes a conductive layer in which a large number of split ring resonators (hereinafter, each referred to as an "SRR") are formed. The SRRs are formed by periodically cutting a thin film of a conductive material into the shape of SRRs with an opening. Each SRR has a substantially C shape formed by splitting a part of a ring and thus providing an opening. An SRR shows a different transmittance depending on the frequency and polarization direction of the terahertz electromagnetic waves applied.

The electromagnetic wave detection device 100 irradiates the resonance structure composed of SRRs with terahertz electromagnetic waves polarized in a specific direction and having a frequency (resonance frequency) at which resonance is generated by the SRRs. The electromagnetic wave detection device 100 detects the transmittance based on the terahertz electromagnetic waves that have passed through the medium.

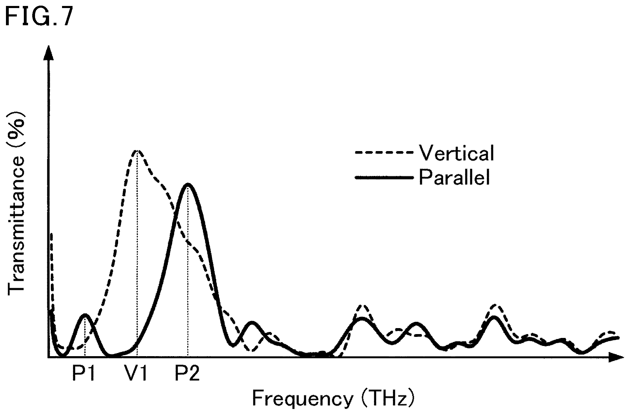

The resonance frequency order is now described. FIG. 7 shows an example of frequency characteristics relative to transmittances obtained by irradiating a region including SRRs with terahertz electromagnetic waves. The frequency characteristics shown in FIG. 7 can be obtained when a large number of SRRs with an opening are arranged at equal intervals in a range sufficiently larger than the irradiation range to be irradiated with the terahertz electromagnetic waves.

When the polarization direction of the terahertz electromagnetic waves applied and the direction of the openings of the SRRs formed in the irradiation region are the same, i.e., when these directions are parallel, the frequency characteristics indicated by the solid line shown in FIG. 7 can be obtained. When the polarization direction of the terahertz electromagnetic waves applied and the direction of the openings of the SRRs formed in the irradiation region are perpendicular, the frequency characteristics indicated by the broken line in FIG. 7 can be obtained. Specifically, for example, in the case where the direction of the openings of the SRRs is the X-axis direction, the frequency characteristics indicated by the solid line can be obtained when the polarization direction of the terahertz electromagnetic waves is the X-axis direction, while the frequency characteristics indicated by the broken line can be obtained when the polarization direction of the terahertz electromagnetic waves is the Y-axis direction. The direction of the opening of each SRR is the direction in which the opening is provided as viewed from the center of the SRR.

When the direction of the openings of the SRRs and the polarization direction of the terahertz electromagnetic waves are the same direction (parallel), two distinct peaks, namely a peak at frequency P1 and a peak at frequency P2, are observed as shown by the solid line in FIG. 7. When the direction of the openings of the SRRs and the polarization direction of the terahertz electromagnetic waves are perpendicular, a distinct peak is observed at frequency V1 as shown by the broken line in FIG. 7. The ascending order of these frequencies at which the peaks are obtained is P1, V1, and P2. The peak transmittances at frequencies P1, V1, and P2 are hereinafter also referred to as peaks P1, V1, and P2, respectively.

The frequency (predetermined frequency) of the terahertz electromagnetic waves applied is preferably a frequency at which the transmittance changes significantly when the direction of the openings of the SRRs is varied relative to the polarization direction (predetermined direction) of the terahertz electromagnetic waves applied. In consideration of the ratio of the transmittance of the parallel polarized light (solid line) to the transmittance of the perpendicular polarized light (broken line) at each of the peaks P1, V1, and P2, the peaks with a large ratio are P1 and V1, and the peak with the largest ratio is V1. Therefore, the peak V1 is preferably employed to compare the differences in transmittance when the SRRs are irradiated with the terahertz electromagnetic waves polarized in a predetermined direction. In the present embodiment, since the peaks with a large ratio are P1 and V1, the peak P1 frequency is defined as the primary resonance frequency, and the peak V1 frequency is defined as the secondary resonance frequency, which will be described later. The primary resonance frequency may be a frequency band that includes the peak P1 frequency and the surrounding frequencies, and the secondary resonance frequency may be a frequency band that includes the peak V1 frequency and the surroundings frequencies. For comparison of differences in transmittance, the peak P1 may be employed instead of the peak V1.

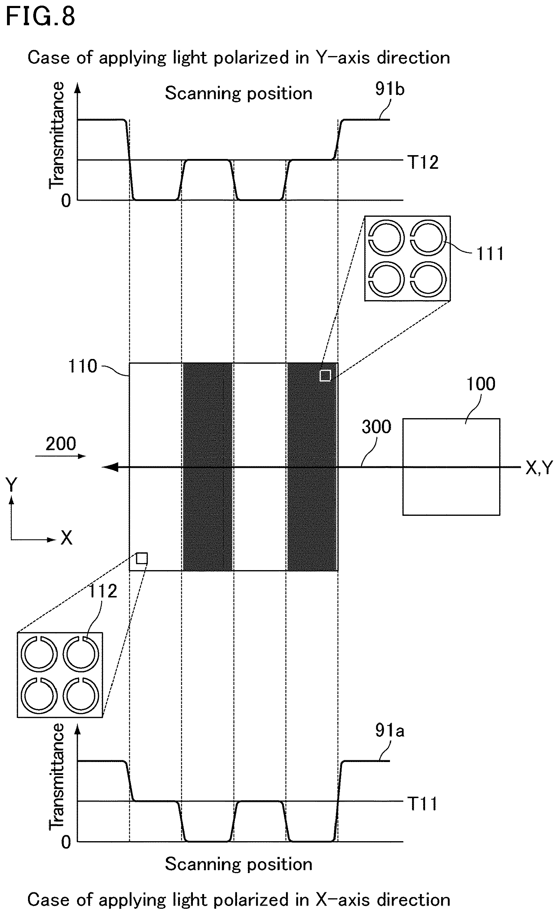

An example of examining the transmission characteristics of a resonance structure is described with reference to FIG. 8. Here, the first transmission unit 11, the second transmission unit 12, the first reception unit 21, and the second reception unit 22 are used to examine the terahertz electromagnetic wave transmission characteristics of a resonance structure 110 shown in FIG. 8. The resonance structure 110 has a square sheet shape of approximately 20 mm in length and width, and composed of four regions divided equally in the X-axis direction.

The black regions and the white regions shown in FIG. 8 each are a resonance structure formed from a metamaterial. As shown in the partially enlarged views in FIG. 8, SRRs 111 and 112 are arranged in the respective regions. The direction of the openings of the SRRs 111 in the black regions differs from that of the SRRs 112 in the white regions. Therefore, the black and white regions show different transmittances depending on the polarization direction of the terahertz electromagnetic waves.

FIG. 8 shows the case of applying terahertz electromagnetic waves having the secondary resonance frequency V1. The SRRs 112 in the white regions each are provided with an opening in the direction parallel to the Y-axis direction. When they are irradiated with terahertz electromagnetic waves polarized in the Y-axis direction, the transmittance in the white regions is substantially 0 (zero). In contrast, when they are irradiated with terahertz electromagnetic waves polarized in the X-axis direction, the transmittance in the white regions is high. The SRRs 111 in the black regions each are provided with an opening in the direction parallel to the X-axis direction. Therefore, when they are irradiated with terahertz electromagnetic waves polarized in the X-axis direction, the transmittance in the black regions is substantially 0 (zero). In contrast, when they are irradiated with terahertz electromagnetic waves polarized in the Y-axis direction, the transmittance in the black regions is high. Here, for the sake of convenience, the transmittance is described to be substantially 0. The expression "the transmittance is substantially 0" means that the transmittance is sufficiently low as compared with a high transmittance (e.g., less than or equal to 10% of the high transmittance), and may be an absolutely low value as compared with the high transmittance (e.g., less than or equal to 6%).

As shown in FIG. 8, a medium including the resonance structure 110 is transported by the transport unit 2 in the transport direction indicated by the arrow 200 and the resonance structure 110 passes through the detection region 1. The first optical system including the first transmission unit 11 and the first reception unit 21 transmits and receives the first terahertz electromagnetic waves polarized in the X-axis direction in the XY plane in the detection region 1. The first optical system scans the resonance structure 110 as indicated by the arrow 300 in FIG. 8 to obtain the transmittances of the first terahertz electromagnetic waves polarized in the X-axis direction. The second optical system including the second transmission unit 12 and the second reception unit 22 transmits and receives the second terahertz electromagnetic waves polarized in the Y-axis direction in the XY plane in the detection region 1. The second optical system scans the resonance structure 110 as indicated by the arrow 300 in FIG. 8 to obtain the transmittances of the second terahertz electromagnetic waves polarized in the Y-axis direction.

As a result, the first optical system, which transmits and receives the first terahertz electromagnetic waves polarized in the X-axis direction in the XY plane in the detection region 1, obtains a transmittance waveform 91a with a transmittance in the white regions of a predetermined value T11 and with a transmittance in the black regions of substantially 0 (zero) as shown in the lower portion in FIG. 8. The second optical system, which transmits and receives the second terahertz electromagnetic waves polarized in the Y-axis direction in the XY plane in the detection region 1, obtains a transmittance waveform 91b with a transmittance in the white regions of substantially 0 (zero) and with a transmittance in the black regions of a predetermined value T12 as shown in the upper portion in FIG. 8.

As described above, the transmittances obtained in scanning of the black regions are different between the optical system transmitting and receiving the terahertz electromagnetic waves polarized in the X-axis direction in the XY plane and the optical system transmitting and receiving the terahertz electromagnetic waves polarized in the Y-axis direction in the XY plane. Similarly, the transmittances obtained in scanning of the white regions are different between the optical system transmitting and receiving the terahertz electromagnetic waves polarized in the X-axis direction in the XY plane and the optical system transmitting and receiving the terahertz electromagnetic waves polarized in the Y-axis direction in the XY plane.

For example, when a conventional device that transmits and receives only the terahertz electromagnetic waves polarized in the X-axis direction is used to examine the resonance structure 110 in the above manner, only the transmittance waveform 91a can be obtained. This result suggests that there are two types of regions with different transmittances, but does not reveal that each of these regions shows a different transmittance depending on the polarization direction. The electromagnetic wave detection device 100 of the present embodiment obtains the two types of transmittance waveforms, namely the transmittance waveforms 91a and 91b as shown in FIG. 8, in one measurement. The electromagnetic wave detection device 100 can thereby detect the characteristic that there are two types of regions, i.e., the black regions and the white regions, which show different transmittances when irradiated with the terahertz electromagnetic waves polarized in a predetermined direction, and also the unique transmission characteristic that the levels of the transmittances in these regions are reversed when the polarization direction of the terahertz electromagnetic waves is changed by 90 degrees.

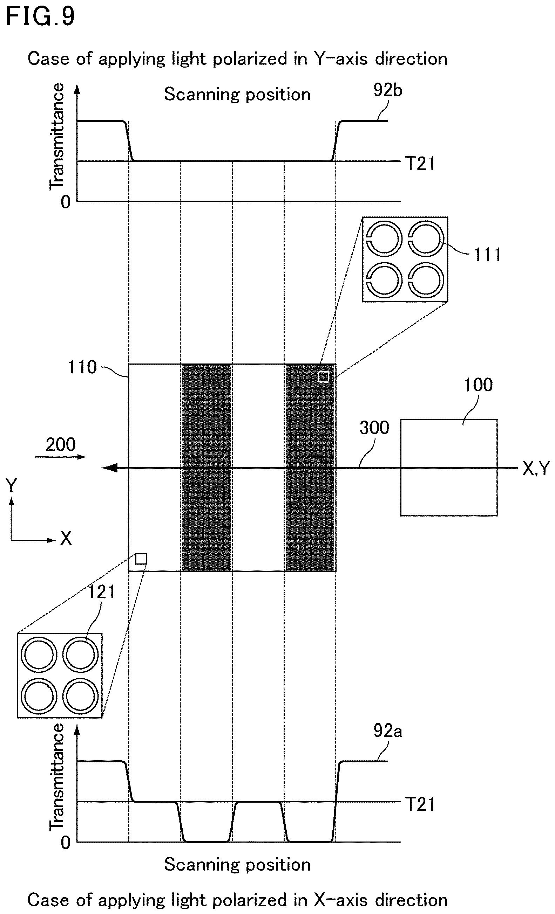

Next, another example of examining the transmission characteristics of a resonance structure is described with reference to FIG. 9. The resonance structure 110 shown in FIG. 9 differs from that in FIG. 8 only in the structure of the white regions. As shown in the partially enlarged views in FIG. 9, the white regions each have a structure in which a large number of closed ring resonators (hereinafter, each referred to as a "CRR") 121 without an opening are formed at equal intervals in a thin film made of a conductive material. Each CRR 121 has a ring shape with no opening, which is obtained by eliminating the opening from an SRR. The CRRs 121, as with the SRRs, show a different transmittance depending on the frequency of the terahertz electromagnetic waves applied. Specifically, the CRRs 121 show a high transmittance as a result of resonance at the secondary resonance frequency V1 of the SRRs 112 whose ring portions have the same shape as the CRRs 121. The CRRs 121, however, show a high transmittance at the secondary resonance frequency V1 regardless of whether the polarization direction of the terahertz electromagnetic waves is the X-axis direction or the Y-axis direction.

In the case where the black regions are irradiated with terahertz electromagnetic waves having the secondary resonance frequency V1, as with the case shown in FIG. 8, the transmittance is high when the polarization direction of the terahertz electromagnetic waves is the Y-axis direction, while the transmittance is substantially 0 (zero) when the polarization direction is the X-axis direction. In the case where the white regions including the CRRs 121 are irradiated with the terahertz electromagnetic waves having the secondary resonance frequency V1, the transmittance is high regardless of whether the polarization direction of the terahertz electromagnetic waves is the X-axis direction or the Y-axis direction.

The SRRs 111 in the black regions and the CRRs 121 in the white regions differ only in provision of the opening and are the same in the shape of their ring portion. Therefore, the transmittances are substantially the same at the secondary resonance frequency V1 in the white regions and the black regions. As a result, the second optical system, which transmits and receives the second terahertz electromagnetic waves polarized in the Y-axis direction in the XY plane in the detection region 1, obtains a transmittance waveform 92b with a substantially constant value T21 in both the white regions and the black regions as shown in the upper portion in FIG. 9. The first optical system, which transmits and receives the first terahertz electromagnetic waves polarized in the X-axis direction in the XY plane in the detection region 1, obtains a transmittance waveform 92a with a transmittance of T21 in the white regions as in the upper portion in FIG. 9 and with a transmittance of substantially 0 (zero) in the black regions as shown in the lower portion in FIG. 9.

Thus, the two types of transmittance waveforms, i.e., the transmittance waveforms 92a and 92b shown in FIG. 9, can be obtained in one measurement even when a region including the CRRs 121 is used. The electromagnetic wave detection device 100 can thereby detect the characteristic that there are two types of regions, i.e., the black regions and the white regions, which show different transmittances when irradiated with the terahertz electromagnetic waves polarized in a predetermined direction, and also the unique transmission characteristic that the transmittances in these regions change when the polarization direction of the terahertz electromagnetic waves is changed by 90 degrees.

Resonance structures formed from metamaterials are used as anti-counterfeiting structures to prevent counterfeiting of media such as banknotes, checks, and vouchers. Counterfeiting of media can be prevented by providing resonance structures as anti-counterfeiting structures on the surfaces of or inside the media. The types and authenticity of media can be determined by detecting the anti-counterfeiting structures in the media.

The medium handling device according to the present embodiment includes the electromagnetic wave detection device 100 and uses the electromagnetic wave detection device 100 to irradiate a medium with terahertz electromagnetic waves. Thus, the medium handling device can determine the type and authenticity of the medium based on the obtained characteristics.

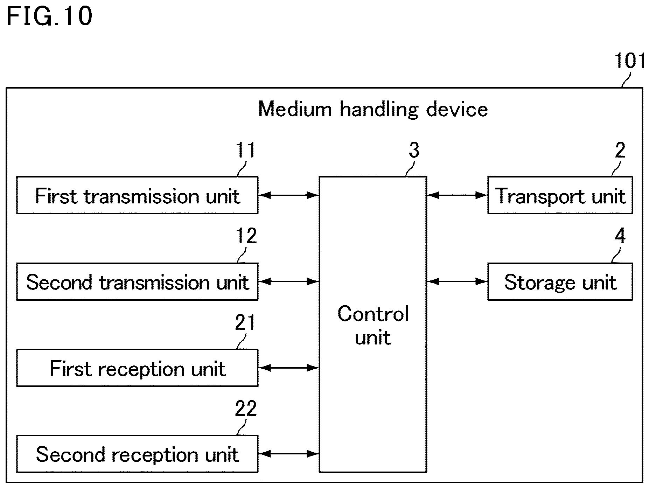

As shown in FIG. 10, the medium handling device 101 according to the present embodiment includes a storage unit 4 in addition to the electromagnetic wave detection device 100 shown in FIG. 6. The storage unit 4 is a nonvolatile storage device including, for example, a semiconductor memory. The storage unit 4 stores in advance data such as the transmittances obtained by irradiating the anti-counterfeiting structures with predetermined terahertz electromagnetic waves, the transmittance waveforms, and the characteristics of the waveforms, as reference data.

In addition to controlling the transport of a medium by the transport unit 2 and the transmission and reception of terahertz electromagnetic waves by the first transmission unit 11, the second transmission unit 12, the first reception unit 21, and the second reception unit 22 as described above, for example, the control unit 3 acquires data such as the transmittances of terahertz electromagnetic waves that have passed through the anti-counterfeiting structure and the waveform of the transmittances. The control unit 3 compares at least one of the transmittances, the waveform of the transmittances, or the characteristics of the waveform, for example, with the corresponding reference data stored in advance in the storage unit 4 to determine the authenticity of the medium. The control unit 3 outputs the authenticity determination result to an external unit which is not shown. For example, the control unit 3 outputs the authenticity determination result to a display to report the authenticity determination result on the display.

The medium handling device 101 can be used to determine the authenticity of a medium including an anti-counterfeiting structure or to inspect the anti-counterfeiting structure fabricated on the medium, for example. The medium handling device 101 can output the authenticity determination result or output the intensity or transmittance of the terahertz electromagnetic waves that have passed through the anti-counterfeiting structure. The output data is used in inspection of the anti-counterfeiting structure by the medium handling device 101. Specifically, the intensity or transmittance of the terahertz electromagnetic waves detected in inspection of a properly fabricated anti-counterfeiting structure is stored as reference data in the storage unit 4 in advance. Then, in the process of fabricating an anti-counterfeiting structure, the terahertz electromagnetic waves are transmitted by the transmission units 11 and 12 and applied to the anti-counterfeiting structure to be inspected. The terahertz electromagnetic waves that have passed through the anti-counterfeiting structure are received by the corresponding reception unit 21 or 22. The intensity or transmittance of the terahertz electromagnetic waves detected using the anti-counterfeiting structure to be inspected is compared with the reference data to determine whether or not it matches the reference data, i.e., whether or not the fabricated anti-counterfeiting structure is acceptable. In this manner, the data detected using the anti-counterfeiting structure by the medium handling device 101 may be compared with the reference data for authenticity determination or acceptance determination.

The processing executed by the medium handling device 101 will be described in more detail. The storage unit 4 stores in advance the software programs and data necessary for the control unit 3 to recognize a medium. Data on the transmittance waveform appearing when predetermined terahertz electromagnetic waves are applied to a genuine medium and data on the characteristics of the transmittance waveform, as reference data. Specifically, at least one of the transmittance waveform, the transmittances forming the transmittance waveform, or the characteristics of the transmittance waveform, for example, is used to recognize the medium. Such characteristics used for the recognition are stored as reference data in the storage unit 4 in advance. The control unit 3 functions as a determination unit that recognizes a medium using the reference data.

The control unit 3 controls the transport unit 2 to transport the medium in question. The control unit 3 controls each of the transmission units 11 and 12 to irradiate the medium transported by the transport unit 2 with terahertz electromagnetic waves. The control unit 3 controls each of the reception units 21 and 22 to receive the terahertz electromagnetic waves that have passed through the medium. When the medium is a genuine medium, the transmittances of the terahertz electromagnetic waves that have passed through the resonance structure (anti-counterfeiting structure) thereof form a waveform corresponding to the structure of the resonance structure as described with reference to FIGs. 8 and 9. The control unit 3 compares the obtained transmittance waveform with the reference data stored in the storage unit 4.

The reference data is data on the characteristics of the transmittance waveform appearing when the resonance structure of a genuine medium is irradiated with terahertz electromagnetic waves. The control unit 3 determines that the resonance structure is provided to a genuine medium, i.e., the medium in question is a genuine medium, when the characteristics of the transmittance waveform obtained using the medium in question match the characteristics prepared as the reference data.

For example, the storage unit 4 stores the reference data for the first optical system obtained using the resonance structure of a genuine medium and the reference data for the second optical system obtained using the resonance structure of the genuine medium. The control unit 3 compares the characteristics of the transmittance waveform obtained using the resonance structure of the medium in question by the first optical system with the reference data for the first optical system. The control unit 3 also compares the characteristics of the transmittance waveform obtained using the resonance structure of the medium in question by the second optical system with the reference data for the second optical system.

When the characteristics of the transmittance waveform obtained using the resonance structure match the reference data both in the first and second optical systems, the control unit 3 determines that the resonance structure is a genuine resonance structure, i.e., the medium in question is a genuine medium.

As described above, the medium handling device 101 irradiates the medium with two types of terahertz electromagnetic waves polarized in different directions, and thereby can determine the authenticity of the medium based on the two types of transmittance waveforms obtained using the resonance structure provided to the medium.

The characteristics of the transmittance waveforms used for the determination are not limited as long as the authenticity of the medium can be determined. For example, the determination may be made by using the entire transmittance waveform obtained by scanning the resonance structure. The determination may be made by using one or more transmittances forming the transmittance waveform, or the determination may be made by using values such as the slope of the transmittance waveform or a change in the slope.

The two types of transmittance waveforms obtained by the first and second optical systems may not be separately used for the determination. A transmittance ratio may be obtained from the two types of transmittance waveforms and the determination may be made based on the result of comparison between the obtained ratio and the reference data.

The characteristics used to determine the authenticity of a medium are not limited to the transmittance ratio. For example, the characteristics used to determine the authenticity may be a difference between transmittances. Specifically, the medium handling device 101 may obtain a difference between the transmittances from the two types of transmittance waveforms obtained by the first and second optical systems, and compare the obtained value with the reference data on the difference between transmittances prepared in advance.

When different types of media include resonance structures having different structures, the medium handling device 101 can identify the types of the media. Specifically, for example, a case is described assuming that two types of media, i.e., type A medium and type B medium, respectively include the resonance structure shown in FIG. 8 and the resonance structure shown in FIG. 9. In this case, the medium handling device 101 can determine that the medium in question is a genuine medium and a type A medium, based on the results that the two types of transmittance waveforms 91a and 91b shown in FIG. 8 are obtained using the medium. Similarly, the medium handling device 101 can determine that the medium in question is a genuine medium and a type B medium, based on the results that the two types of the transmittance waveforms 92a and 92b shown in FIG. 9 are obtained using the medium.

The medium handling device 101 is used, for example, in the state of being connected to a display as described above. The display shows the determination result obtained by the medium handling device 101 on the screen. The user of the medium handling device 101 can see the determination result shown on the screen of the display to handle the medium based on the determination result.

Also, for example, the medium handling device 101 is used as a medium inspection device to inspect the resonance structure provided to a medium as described above. In this case, data on the characteristics of a genuine medium is stored as the reference data in the storage unit 4. The control unit 3 functions as a determination unit to determine the inspection result of the medium (acceptable or not) by comparing the characteristics obtained using the medium to be inspected with the reference data. After a resonance structure is provided to a medium, the control unit 3 irradiates the medium with two types of terahertz electromagnetic waves as described above. The control unit 3 compares the characteristics of the obtained transmittance waveforms, for example, with the reference data to determine whether or not the resonance structure provided to the medium shows the predetermined characteristics.

In addition, for example, the medium handling device 101 executes processings such as counting, storing, and classifying of media based on the determination result obtained by the electromagnetic wave detection device 100. At this time, only the authenticity of each medium may be determined based on the determination result obtained by the electromagnetic wave detection device 100 or both the type and authenticity of the medium may be determined.

Specifically, for example, the medium handling device 101 is used as a banknote handling device. For example, the banknote handling device is fed with a plurality of banknotes one by one continuously, determines the type and authenticity of each banknote, and stores the banknotes in a plurality of storing units by the types of the banknotes. The banknote handling device uses the electromagnetic wave detection device 100 to determine the type (denomination) and authenticity of each banknote as described above. The banknote handling device counts the number of banknotes and the face values of the banknotes based on the determination results, sorts the banknotes according to the types thereof, and stores the banknotes by the types.

Conventional banknote handling devices use various sensors such as line sensors, thickness sensors, and magnetic sensors to examine the characteristics such as the optical characteristics, thickness, and magnetic characteristics of a banknote for determination of the type and authenticity of the banknote. The banknote handling device incorporating the electromagnetic wave detection device 100 may recognize a banknote based on both the determination results from the conventional sensors and the determination results from the electromagnetic wave detection device 100. For example, the banknote handling device may use the conventional sensors to determine the type of the banknote, and then use the electromagnetic wave detection device 100 to determine the authenticity of the banknote. Alternatively, for example, the banknote handling device may obtain the type and authenticity determination results from the conventional sensors and the type and authenticity determination results from the electromagnetic wave detection device 100, and then comprehensively determine the obtained determination results to determine the type and authenticity of the banknote. Here, the electromagnetic wave detection device 100 may be used to determine only the authenticity of the banknote, and the banknote handling device may comprehensively determine the type and authenticity determination results from the conventional sensors and the authenticity determination result from the electromagnetic wave detection device 100.

As described above, in the present embodiment, the electromagnetic wave detection device 100 can easily detect the characteristics of a medium (resonance structure) under a plurality of terahertz electromagnetic waves having different properties since the electromagnetic wave detection device 100 includes the first transmission unit 11 configured to irradiate the detection region 1 with the first terahertz electromagnetic waves having the first property; the second transmission unit 12 configured to irradiate the detection region 1 with the second terahertz electromagnetic waves having the second property different from the first property; the first reception unit 21 configured to receive the first terahertz electromagnetic waves that have passed through the detection region 1; and the second reception unit configured to receive the second terahertz electromagnetic waves that have passed through the detection region 1.

Also, the method of detecting electromagnetic waves can easily detect the characteristics of a medium (resonance structure) under a plurality of terahertz electromagnetic waves having different properties since the method of detecting electromagnetic waves includes irradiating the same detection region 1 with the first terahertz electromagnetic waves having the first property and the second terahertz electromagnetic waves having the second property different from the first property, and receiving the first terahertz electromagnetic waves and the second terahertz electromagnetic waves that have passed through the detection region 1.

### <Modified embodiment>

In the embodiment above, the case is described where each optical system includes a transmission unit and a reception unit. The first and second optical systems, however, may share a common transmission unit or reception unit.

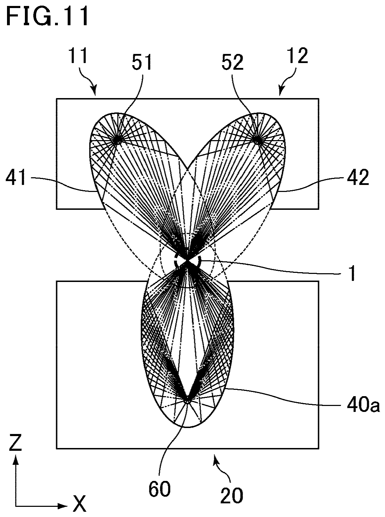

More specifically, as shown in FIG. 11, one reception unit 20 may be provided, and the first terahertz electromagnetic waves transmitted by the first transmission element 51 of the first transmission unit 11 and the second terahertz electromagnetic waves transmitted by the first transmission element 52 of the second transmission unit 12 may be received by a reception element 60 of the reception unit 20.

In this case, an ellipsoidal reflector 40a as a condensing unit is placed to surround the reception element 60, and the light receiving point (reception point) of the reception element 60 is provided at one of the focal points of the reference ellipse corresponding to the ellipsoidal reflector 40a. Also, the first ellipsoidal reflector 41 is placed to surround the first transmission element 51, and the emission point (transmission point) of the first transmission element 51 is provided at one of the focal points of the reference ellipse corresponding to the first ellipsoidal reflector 41. Furthermore, the second ellipsoidal reflector 42 is placed to surround the second transmission element 52, and the emission point (transmission point) of the second transmission element 52 is provided at one of the focal points of the reference ellipse corresponding to the second ellipsoidal reflector 42. Then, the other focal point of each of these reference ellipses is provided in the detection region 1.

Thus, the first terahertz electromagnetic waves transmitted from the first transmission unit 11 toward the first ellipsoidal reflector 41 are reflected by the first ellipsoidal reflector 41 obliquely toward the detection region 1. The reflected first terahertz electromagnetic waves are collected to the detection region 1. The first terahertz electromagnetic waves that have passed through the medium in the detection region 1 are reflected by the one side of the surface of the ellipsoidal reflector 40a and collected to the reception element 60. Also, the second terahertz electromagnetic waves transmitted from the second transmission unit 12 toward the second ellipsoidal reflector 42 are reflected by the second ellipsoidal reflector 42 obliquely toward the detection region 1. The reflected second terahertz electromagnetic waves are collected to the detection region 1. The second terahertz electromagnetic waves that have passed through the medium in the detection region 1 are reflected by the other side of the surface of the ellipsoidal reflector 40a and collected to the reception element 60. Thus, the first terahertz electromagnetic waves and the second electromagnetic waves can be received by one reception unit 20.

In the case shown in FIG. 11, as in the embodiment above, the first terahertz electromagnetic waves may be applied by the first transmission unit 11 and the second terahertz electromagnetic waves may be applied by the second transmission unit 12 at different timings. Still, the first transmission unit 11 and the second transmission unit 12 respectively preferably irradiate the detecting region 1 with the first terahertz electromagnetic waves and the second terahertz electromagnetic waves simultaneously. In this case, the reception element 60 of the reception unit 20 is preferably an element that can receive at least two types of terahertz electromagnetic waves polarized in different directions.

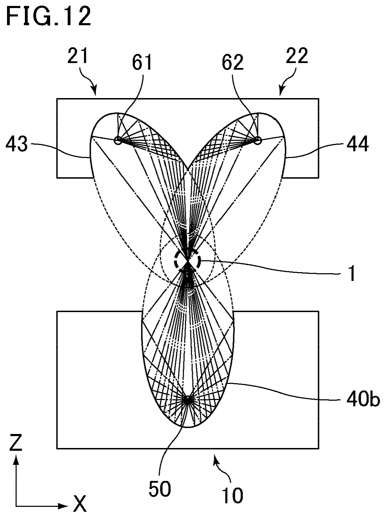

As shown in FIG. 12, one transmission unit 10 may be provided to transmit the first terahertz electromagnetic waves and the second terahertz electromagnetic waves from a transmission element 50 of the transmission unit 10, and the first terahertz electromagnetic waves and the second terahertz electromagnetic waves may be received by the first reception unit 21 and the second reception unit 22, respectively.

In this case, an ellipsoidal reflector 40b as a condensing unit is placed to surround the transmission element 50, and the emission point (transmission point) of the transmission element 50 is provided at one of the focal points of the reference ellipse corresponding to the ellipsoidal reflector 40b. Also, the third ellipsoidal reflector 43 is placed to surround the first reception element 61, and the light receiving point (reception point) of the first reception element 61 is provided at one of the focal points of the reference ellipse corresponding to the third ellipsoidal reflector 43. Furthermore, the fourth ellipsoidal reflector 44 is placed to surround the second reception element 62, and the light receiving point (reception point) of the second reception element 62 is provided at one of the focal points of the reference ellipse corresponding to the fourth ellipsoidal reflector 44. The other focal point of each of these reference ellipses is provided in the detection region 1.

Thus, the first terahertz electromagnetic waves transmitted from the transmission element 50 toward the one side of the surface of the ellipsoidal reflector 40b are reflected by the ellipsoidal reflector 40b obliquely toward the detection region 1. The reflected first terahertz electromagnetic waves are collected to the detection region 1. The first terahertz electromagnetic waves that have passed through the medium in the detection region 1 are reflected by the third ellipsoidal reflector 43 and collected to the first reception element 61. Also, the second terahertz electromagnetic waves transmitted from the transmission element 50 toward the other side of the surface of the ellipsoidal reflector 40b are reflected by the ellipsoidal reflector 40b obliquely toward the detection region 1. The reflected second terahertz electromagnetic waves are collected to the detection region 1. The second terahertz electromagnetic waves that have passed through the medium in the detection region 2 are reflected by the fourth ellipsoidal reflector 44 and collected to the second reception element 62. Thus, the first terahertz electromagnetic waves and the second terahertz electromagnetic waves can be transmitted from one transmission unit 10.

In the case shown in FIG. 12, the transmission unit 10 may irradiate the detection region 1 with the first terahertz electromagnetic waves and the second terahertz electromagnetic waves simultaneously. Still, the transmission unit 10 preferably applies the first terahertz electromagnetic waves and the second terahertz electromagnetic waves at different timings.

Alternatively, in the case shown in FIG. 12, the transmission unit 10 may apply one type of terahertz electromagnetic waves polarized in a predetermined direction (e.g., terahertz electromagnetic waves polarized in the direction of 45° relative to the X-axis direction and the Y-axis direction in the XY plane in the detection region 1). The terahertz electromagnetic waves that have passed through the medium in the detection region 1 may be then converted to the first terahertz electromagnetic waves and the second terahertz electromagnetic waves that have different properties (that are polarized in different directions) by two polarizers with different polarization axis directions. The converted first terahertz electromagnetic waves and second electromagnetic waves may be received by the first reception unit 21 and the reception unit 22, respectively.

In the embodiment above, the case is described where one pair of detection units 5 and 6 is provided. However, a plurality of the pair of detection units 5 and 6 may be provided.

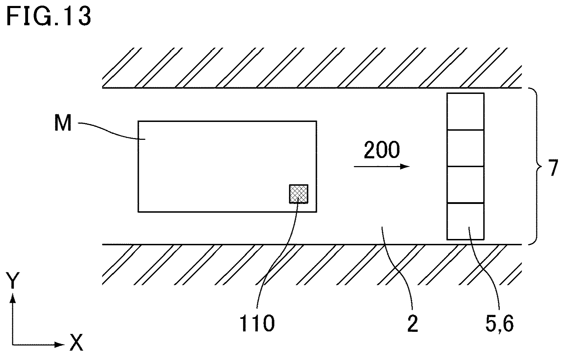

More specifically, as shown in FIG. 13, a plurality of the pair of the detection units 5 and 6 may be arrayed in a line in the width direction (e.g., Y-axis direction) of the transport path 7 along which a medium M is transported. Thus, the characteristics of a plurality of sites of the medium M can be detected simultaneously.

The pair of detection units 5 and 6 may be arrayed in a line in the Y-axis direction, and the medium M may be transported by the transport unit 2 along the transport path 7 in the transport direction (X-axis direction) indicated by the arrow 200. The transport means such as rollers or belts included in the transport unit 2 are arranged opposite to each other across the transport path 7.

The pair of detection units 5 and 6 may be arrayed in a line in the transport direction of the medium M (e.g., the X-axis direction).

In the embodiment above, the case is described where the first property and the second property are the polarization characteristics. However, outside the scope of the present invention the first property and the second property may be the frequencies. In other words, the first terahertz electromagnetic waves may be electromagnetic waves having the first frequency (predetermined frequency), and the second terahertz electromagnetic waves may be electromagnetic waves having the second frequency (predetermined frequency) different from the first frequency. Even in this case, the characteristics of the medium (resonance structure) under a plurality of terahertz electromagnetic waves having different properties can be easily detected. This mode can be used when the metamaterial functioning as a resonance structure is composed of one type of SRRs (the directions of the openings are the same). More specifically, in the case of a metamaterial having the characteristics indicated by the solid line in FIG. 7, for example, the first terahertz electromagnetic waves polarized in the same (parallel) direction as the direction of the openings and having the first frequency at the peak frequency P1 are applied to detect the transmittance at the peak frequency P1, and the second terahertz electromagnetic waves polarized in the same (parallel) direction as the direction of the openings and having the second frequency at the bottom frequency where the transmittance near the peak frequency V1 is around 0 are applied to detect the transmittance at the bottom frequency. In this case, the transmittance is substantially constant in the first optical system that transmits and receives the first terahertz electromagnetic waves, while the transmittance is near 0 in the second optical system that transmits and receives the second terahertz electromagnetic waves. This mode can also be used when the metamaterial functioning as the resonance structure has a plurality of resonance frequencies (specifically, when two types of SRRs of different (large and small) sizes are included (the directions of the openings are the same)).

The first terahertz electromagnetic waves and the second terahertz electromagnetic waves may differ from each other in both the polarization characteristics and frequencies. In other words, the first terahertz electromagnetic waves may be polarized in the first polarization direction (e.g., the X-axis direction in the XY plane) in the detection region 1 and have the first frequency (predetermined frequency), and the second terahertz electromagnetic waves may be polarized in the second polarization direction different from the first polarization direction (e.g., the Y-axis direction in the XY plane) in the detection region 1 and have the second frequency (predetermined frequency) different from the first frequency. Even in this case, the characteristics of a medium (resonance structure) under a plurality of terahertz electromagnetic waves having different properties can be easily detected. This mode can be used when the metamaterial functioning as a resonance structure is composed of one type of SRRs (the directions of the openings are the same), for example. More specifically, for example, in the case of a metamaterial having the characteristics indicated by the solid line and the dashed line in FIG. 7, the first terahertz electromagnetic waves polarized in the same (parallel) direction as the direction of the openings and having the first frequency at the peak frequency P1 are applied to detect the transmittance at the peak frequency P1, and the second terahertz electromagnetic waves polarized in the direction perpendicular to the direction of the openings and having the second frequency at the peak frequency V1 are applied to detect the transmittance at the peak frequency V1. In this case, the transmittance is relatively low and substantially constant in the first optical system that transmits and receives the first terahertz electromagnetic waves, and the transmittance is relatively high and substantially constant in the second optical system that transmits and receives the second terahertz electromagnetic waves.

In the embodiment above, the case is described where both the first terahertz electromagnetic waves and the second terahertz electromagnetic waves are collected to the detection region 1. However, the first terahertz electromagnetic waves and the second terahertz electromagnetic waves may be applied as parallel light rays to the detection region 1.

In the embodiment above, the case is described where the first and second optical systems are inclined from the vertical direction (Z-axis direction). However, the arrangement direction of each optical system is not limited. For example, one of the optical systems may be in the vertical direction and the other of the optical systems may be inclined from the vertical direction.

In the embodiment above, the case is described where two optical systems, namely the first and second optical systems, are used in combination. However, the number of optical systems that irradiate the detection region 1 with a plurality of terahertz electromagnetic waves having characteristics different from each other is not limited. For example, three optical systems may be used in combination.

In the embodiment above, the case is described where the characteristics of the transported medium (resonance structure) are detected. However, the characteristics of a still medium (resonance structure) may be detected. In this case, the electromagnetic wave detection device 100 may not include the transport unit 2, or the transport unit 2 may be used to transport the medium to the detection region 1 to allow the medium to stand still such that the characteristics of the medium (resonance structure) are detected. Then, the transport unit 2 may be used to transport the medium out of the detection region 1.

In the embodiment above, the case is described where a medium is transported in the X-axis direction or the Y-axis direction in a state parallel to the XY plane. However, the medium may be transported in the X-axis direction or the Y-axis direction in a state inclined from the XY plane. In other words, the medium may be transported in the X-axis direction or the Y-axis direction in a state inclined from at least one of the X-axis direction or the Y-axis direction.

### INDUSTRIAL APPLICABILITY

As described above, the present invention provides a useful technique that enables easy detection of a characteristic of an object under a plurality of terahertz electromagnetic waves having different properties.

### REFERENCE SIGNS LIST

1: detection region
2: transport unit
3: control unit
4: storage unit
5, 6: detection unit
7: transport path
10: transmission unit
11: first transmission unit
12: second transmission unit
20: reception unit
21: first reception unit
22: second reception unit
31 to 34: first to fourth condensing units
40a, 40b: ellipsoidal reflector
41 to 44: first to fourth ellipsoidal reflectors
50: transmission element
51: first transmission element
52: second transmission element
60: reception element
61: first reception element
62: second reception element
71: first optical axis
72: second optical axis
91a, 91b, 92a, 92b: transmittance waveform
100: electromagnetic wave detection device
101: medium handling device
110: resonance structure
111, 112: SRR
121: CRR
M: medium

## Claims

1. An electromagnetic wave detection device (100) configured to detect a characteristic of a medium (M) by irradiating the medium with terahertz electromagnetic waves, the device comprising:
a transmission unit (10) configured to irradiate a same detection region (1) with first terahertz electromagnetic waves (71) being light polarized in a first polarization direction and second terahertz electromagnetic waves (72) being light polarized in a second polarization direction different from the first polarization direction, and
a reception unit (60) configured to receive the first terahertz electromagnetic waves that have passed through the detection region (1) and the second terahertz electromagnetic waves that have passed through the detection region (1),
the transmission unit (10) including a first transmission unit (11) configured to emit the first terahertz electromagnetic waves (71) and a second transmission unit (12) configured to emit the second terahertz electromagnetic waves (72) from a direction different than the first terahertz electromagnetic waves,
the first transmission unit (11) including a first condensing unit (31) for reflecting the first terahertz electromagnetic waves (71) to the detection region (1) and the second transmission unit (12) including a second condensing unit (32) for reflecting the second terahertz electromagnetic waves (72) to the detection region (1), such that the optical axis of the first terahertz electromagnetic waves (71) and the optical axis of the second terahertz electromagnetic waves (72) intersect each other in the detection region (1).

2. The electromagnetic wave detection device (100) according to claim 1,
wherein
the reception unit (60) includes a first reception unit (61) and a second reception unit (62);
the first reception unit (61) is configured to receive the first terahertz electromagnetic waves that have passed through the detection region (1);
the second reception unit (62) is configured to receive the second terahertz electromagnetic waves that have passed through the detection region (1).

3. The electromagnetic wave detection device (100) according to claim 1 or 2,
wherein the transmission unit (10) is configured to irradiate the detection region (1) with the first terahertz electromagnetic waves and the second terahertz electromagnetic waves at different timings.

4. The electromagnetic wave detection device (100) according to any claim 1 or 2,
wherein the transmission unit (10) is configured to irradiate the detection region (1) with the first terahertz electromagnetic waves and the second terahertz electromagnetic waves simultaneously.

5. The electromagnetic wave detection device (100) according to any of claims 1 to 4,
wherein each of the first and second condensing units (31, 32) is an ellipsoidal reflector (41, 42) configured to collect the first terahertz electromagnetic waves and the second terahertz electromagnetic waves, respectively.

6. The electromagnetic wave detection device (100) according to any one of claims 1 to 5,
wherein the first terahertz electromagnetic waves have a first frequency,
the second terahertz electromagnetic waves have a second frequency, and
the first frequency is different from the second frequency.

7. The electromagnetic wave detection device (100) according to any one of claims 1 to 6,
wherein the detection region (1) has a size capable of including at least one resonator provided in a medium (M).

8. The electromagnetic wave detection device (100) according to any one of claims 1 to 7, further comprising a transport unit (2) configured to transport a medium (M) along a transport path (7),
wherein the transmission unit (10) is configured to irradiate a transported medium with the first terahertz electromagnetic waves and the second terahertz electromagnetic waves.

9. The electromagnetic wave detection device (100) according to claim 8,
wherein a plurality of pairs of detection units (5, 6), each of the pairs formed by the transmission unit (10) and the reception unit (20), is arranged in a width direction of the transport path (7).

10. A medium handling device (101) comprising the electromagnetic wave detection device (100) according to any one of claims 1 to 9.

11. A method of detecting electromagnetic waves that detects a characteristic of a medium (M) by irradiating the medium with terahertz electromagnetic waves, the method comprising
irradiating a same detection region (1) with first terahertz electromagnetic waves (71) being light polarized in a first polarization direction and second terahertz electromagnetic waves (72) being light polarized in a second polarization direction different from the first polarization direction, and receiving the first terahertz electromagnetic waves and the second terahertz electromagnetic waves (72) that have passed through the detection region,
the first terahertz electromagnetic waves (71) being emitted from a first transmission unit (11),
the second terahertz electromagnetic waves (72) being emitted from a second transmission unit (12) from a direction different than the first terahertz waves (71),
the first terahertz electromagnetic waves (71) being reflected to the detection region (1) by a first condensing unit (31) of the first transmission unit (11) and the second terahertz electromagnetic waves (72) being reflected to the detection region (1) by a second condensing unit (32) of the second transmission unit (12) such that the optical axis of the first terahertz electromagnetic waves (71) and the optical axis of the second terahertz electromagnetic waves (72) intersect each other in the detection region (1).

## Patentansprüche

1. Vorrichtung (100) zur Erfassung elektromagnetischer Wellen, die so konfiguriert ist, dass sie eine Eigenschaft eines Mediums (M) durch Bestrahlung des Mediums mit elektromagnetischen Terahertz-Wellen erfasst, wobei die Vorrichtung umfasst:
eine Sendeeinheit (10), die so konfiguriert ist, dass sie einen gleichen Erfassungsbereich (1) mit ersten elektromagnetischen Terahertz-Wellen (71), die in einer ersten Polarisationsrichtung polarisiertes Licht sind, und zweiten elektromagnetischen Terahertz-Wellen (72), die in einer zweiten Polarisationsrichtung, die sich von der ersten Polarisationsrichtung unterscheidet, polarisiertes Licht sind, bestrahlt, wobei sich die erste Eigenschaft von der zweiten Eigenschaft unterscheidet; und
eine Empfangseinheit (60), die so konfiguriert ist, dass sie die ersten elektromagnetischen Terahertz-Wellen, die den Erfassungsbereich (1) durchlaufen haben, und die zweiten elektromagnetischen Terahertz-Wellen, die den Erfassungsbereich (1) durchlaufen haben, empfängt,
wobei die Übertragungseinheit (10) eine erste Übertragungseinheit (11), die so konfiguriert ist, dass sie die ersten elektromagnetischen Terahertz-Wellen (71) aussendet, und eine zweite Übertragungseinheit (12), die so konfiguriert ist, dass sie die zweiten elektromagnetischen Terahertz-Wellen (72) aus einer anderen Richtung als die ersten elektromagnetischen Terahertz-Wellen aussendet, umfasst,
wobei die erste Übertragungseinheit (11) eine erste Kondensatoreinheit (31) zum Reflektieren der ersten elektromagnetischen Terahertz-Wellen (71) auf den Erfassungsbereich (1) und die zweite Übertragungseinheit (12) eine zweite Kondensatoreinheit (32) zum Reflektieren der zweiten elektromagnetischen Terahertz-Wellen (72) auf den Erfassungsbereich (1) enthält,
so dass sich die optische Achse der ersten elektromagnetischen Terahertz-Wellen (71) und die optische Achse der zweiten elektromagnetischen Terahertz-Wellen (72) im Erfassungsbereich (1) kreuzen.

2. Vorrichtung (100) zur Erfassung elektromagnetischer Wellen nach Anspruch 1,
bei der
die Empfangseinheit (60) eine erste Empfangseinheit (61) und eine zweite Empfangseinheit (62) umfasst;
die erste Empfangseinheit (61) so konfiguriert ist, dass sie die ersten elektromagnetischen Terahertz-Wellen empfängt, die den Erfassungsbereich (1) durchlaufen haben,
die zweite Empfangseinheit (62) so konfiguriert ist, dass sie die zweiten elektromagnetischen Terahertz-Wellen empfängt, die den Erfassungsbereich (1) durchlaufen haben.

3. Vorrichtung (100) zur Erfassung elektromagnetischer Wellen nach Anspruch 1 oder 2,
bei der die Sendeeinheit (10) so konfiguriert ist, dass sie den Erfassungsbereich (1) mit den ersten elektromagnetischen Terahertz-Wellen und den zweiten elektromagnetischen Terahertz-Wellen zu unterschiedlichen Zeitpunkten bestrahlt.

4. Vorrichtung (100) zur Erfassung elektromagnetischer Wellen nach einem der Ansprüche 1 oder 2,
bei der die Sendeeinheit (10) so konfiguriert ist, dass sie den Erfassungsbereich (1) gleichzeitig mit den ersten elektromagnetischen Terahertz-Wellen und den zweiten elektromagnetischen Terahertz-Wellen bestrahlt.

5. Vorrichtung (100) zur Erfassung elektromagnetischer Wellen (100) nach einem der Ansprüche 1 bis 4,
bei der jede der ersten und zweiten Kondensationseinheiten (31, 32) ein ellipsoidischer Reflektor (41, 42) ist, der so konfiguriert ist, dass er die ersten elektromagnetischen Terahertz-Wellen bzw. die zweiten elektromagnetischen Terahertz-Wellen sammelt.

6. Vorrichtung (100) zur Erfassung elektromagnetischer Wellen (100) nach einem der Ansprüche 1 bis 5,
wobei die ersten elektromagnetischen Terahertz-Wellen eine erste Frequenz haben,
die zweiten elektromagnetischen Terahertz-Wellen haben eine zweite Frequenz, und
die erste Frequenz unterscheidet sich von der zweiten Frequenz.

7. Vorrichtung (100) zur Erfassung elektromagnetischer Wellen (100) nach einem der Ansprüche 1 bis 6,
bei der der Erfassungsbereich (1) eine Größe aufweist, die geeignet ist, mindestens einen in einem Medium (M) vorgesehenen Resonator einzuschließen.

8. Vorrichtung (100) zur Erfassung elektromagnetischer Wellen (100) nach einem der Ansprüche 1 bis 7, mit ferner einer Transporteinheit (2), die so konfiguriert ist, dass sie ein Medium (M) entlang eines Transportweges (7) transportiert,
wobei die Sendeeinheit (10) konfiguriert ist, um ein transportiertes Medium mit den ersten elektromagnetischen Terahertz-Wellen und den zweiten elektromagnetischen Terahertz-Wellen zu bestrahlen.

9. Vorrichtung (100) zur Erfassung elektromagnetischer Wellen (100) nach Anspruch 8,
bei der eine Vielzahl von Paaren von Erfassungseinheiten (5, 6), wobei jedes der Paare durch die Sendeeinheit (10) und die Empfangseinheit (20) gebildet wird, in einer Breitenrichtung des Transportpfades (7) angeordnet ist.

10. Vorrichtung zur Handhabung von Medien (101), die die Vorrichtung (100) zur Erfassung elektromagnetischer Wellen nach einem der Ansprüche 1 bis 9 umfasst.

11. Verfahren zur Erfassung elektromagnetischer Wellen, das eine Eigenschaft eines Mediums (M) durch Bestrahlung des Mediums mit elektromagnetischen Terahertz-Wellen erfasst, wobei das Verfahren Folgendes umfasst
Bestrahlen desselben Erfassungsbereichs (1) mit ersten elektromagnetischen Terahertz-Wellen (71), die in einer ersten Polarisationsrichtung polarisiertes Licht sind, und zweiten elektromagnetischen Terahertz-Wellen (72), die in einer zweiten Polarisationsrichtung, die sich von der ersten Polarisationsrichtung unterscheidet, polarisiertes Licht sind, und Empfangen der ersten elektromagnetischen Terahertz-Wellen und der zweiten elektromagnetischen Terahertz-Wellen (72), die den Erfassungsbereich durchlaufen haben,
wobei die ersten elektromagnetischen Terahertz-Wellen (71) von einer ersten Sendeeinheit (11) ausgestrahlt werden,
wobei die zweiten elektromagnetischen Terahertz-Wellen (72) von einer zweiten Sendeeinheit (12) aus einer anderen Richtung als die ersten Terahertz-Wellen (71) ausgestrahlt werden,
wobei die ersten elektromagnetischen Terahertz-Wellen (71) auf den Erfassungsbereich (1) durch eine erste Kondensatoreinheit (31) der ersten Übertragungseinheit (11) und die zweiten elektromagnetischen Terahertz-Wellen (72) auf den Erfassungsbereich (1) durch eine zweite Kondensatoreinheit (32) der zweiten Übertragungseinheit (12) reflektiert werden, so dass die optische Achse der ersten elektromagnetischen Terahertz-Wellen (71) und die optische Achse der zweiten elektromagnetischen Terahertz-Wellen (72) einander in dem Erfassungsbereich (1) schneiden.

## Revendications

1. Dispositif de détection d'ondes électromagnétiques (100) configuré pour détecter une caractéristique d'un support (M) par irradiation du support avec des ondes électromagnétiques térahertz, le dispositif comprenant :
une unité de transmission (10) configurée pour irradier une même région de détection (1) avec des premières ondes électromagnétiques térahertz (71) qui sont une lumière polarisée dans une première direction de polarisation et des deuxièmes ondes électromagnétiques térahertz (72) qui sont une lumière polarisée dans une deuxième direction de polarisation différente de la première direction de polarisation, et
une unité de réception (60) configurée pour recevoir les premières ondes électromagnétiques térahertz qui ont traversé la région de détection (1) et les deuxièmes ondes électromagnétiques térahertz qui ont traversé la région de détection (1),
l'unité de transmission (10) incluant une première unité de transmission (11) configurée pour émettre les premières ondes électromagnétiques térahertz (71) et une deuxième unité de transmission (12) configurée pour émettre les deuxièmes ondes électromagnétiques térahertz (72) à partir d'une direction différente des premières ondes électromagnétiques térahertz,
la première unité de transmission (11) incluant une première unité de condensation (31) pour réfléchir les premières ondes électromagnétiques térahertz (71) vers la région de détection (1) et la deuxième unité de transmission (12) incluant une deuxième unité de condensation (32) pour réfléchir les deuxièmes ondes électromagnétiques térahertz (72) vers la région de détection (1), de telle sorte que l'axe optique des premières ondes électromagnétiques térahertz (71) et l'axe optique des deuxièmes ondes électromagnétiques térahertz (72) se coupent mutuellement dans la région de détection (1).

2. Dispositif de détection d'ondes électromagnétiques (100) selon la revendication 1, dans lequel
l'unité de réception (60) inclut une première unité de réception (61) et une deuxième unité de réception (62) ;
la première unité de réception (61) est configurée pour recevoir les premières ondes électromagnétiques térahertz qui ont traversé la région de détection (1) ;
la deuxième unité de réception (62) est configurée pour recevoir les deuxièmes ondes électromagnétiques térahertz qui ont traversé la région de détection (1).

3. Dispositif de détection d'ondes électromagnétiques (100) selon la revendication 1 ou 2,
dans lequel l'unité de transmission (10) est configurée pour irradier la région de détection (1) avec les premières ondes électromagnétiques térahertz et les deuxièmes ondes électromagnétiques térahertz à différents moments.

4. Dispositif de détection d'ondes électromagnétiques (100) selon l'une quelconque de la revendication 1 ou 2,
dans lequel l'unité de transmission (10) est configurée pour irradier la région de détection (1) avec les premières ondes électromagnétiques térahertz et les deuxièmes ondes électromagnétiques térahertz simultanément.

5. Dispositif de détection d'ondes électromagnétiques (100) selon l'une quelconque des revendication 1 à 4,
dans lequel chacune des première et deuxième unités de condensation (31, 32) est un réflecteur ellipsoïdal (41, 42) configuré pour collecter les premières ondes électromagnétiques térahertz et les deuxièmes ondes électromagnétiques térahertz, respectivement.

6. Dispositif de détection d'ondes électromagnétiques (100) selon l'une quelconque des revendications 1 à 5,
dans lequel les premières ondes électromagnétiques térahertz ont une première fréquence,
les deuxièmes ondes électromagnétiques térahertz ont une deuxième fréquence, et
la première fréquence est différente de la deuxième fréquence.

7. Dispositif de détection d'ondes électromagnétiques (100) selon l'une quelconque des revendications 1 à 6,
dans lequel la région de détection (1) a une taille capable d'inclure au moins un résonateur prévu dans un support (M).

8. Dispositif de détection d'ondes électromagnétiques (100) selon l'une quelconque des revendications 1 à 7,
comprenant en outre une unité de transport (2) configurée pour transporter un support (M) le long d'un trajet de transport (7),
dans lequel l'unité de transmission (10) est configurée pour irradier le support transporté avec les premières ondes électromagnétiques térahertz et les deuxièmes ondes électromagnétiques térahertz.

9. Dispositif de détection d'ondes électromagnétiques (100) selon la revendication 8,
dans lequel une pluralité de paires d'unités de détection (5, 6), chacune des paires étant formée par l'unité de transmission (10) et l'unité de réception (20), est agencée dans une direction de largeur du trajet de transport (7).

10. Dispositif de manipulation de support (101) comprenant le dispositif de détection d'ondes électromagnétiques (100) selon l'une quelconque des revendications 1 à 9.

11. Procédé de détection d'ondes électromagnétiques qui détecte une caractéristique d'un support (M) par irradiation du support avec des ondes électromagnétiques térahertz, le procédé comprenant l'irradiation d'une même région de détection (1) avec des premières ondes électromagnétiques térahertz (71) qui sont une lumière polarisée dans une première direction de polarisation et des deuxièmes ondes électromagnétiques térahertz (72) qui sont une lumière polarisée dans une deuxième direction de polarisation différente de la première direction de polarisation, et la réception des premières ondes électromagnétiques térahertz et des deuxièmes ondes électromagnétiques térahertz (72) qui ont traversé la région de détection,
les premières ondes électromagnétiques térahertz (71) étant émises à partir d'une première unité de transmission (11),
les deuxièmes ondes électromagnétiques térahertz (72) étant émises à partir d'une deuxième unité de transmission (12) à partir d'une direction différente des premières ondes térahertz (71),
les premières ondes électromagnétiques térahertz (71) étant réfléchies vers la région de détection (1) par une première unité de condensation (31) de la première unité de transmission (11) et les deuxièmes ondes électromagnétiques térahertz (72) étant réfléchies vers la région de détection (1) par une deuxième unité de condensation (32) de la deuxième unité de transmission (12) de telle sorte que l'axe optique des premières ondes électromagnétiques térahertz (71) et l'axe optique des deuxièmes ondes électromagnétiques térahertz (72) se coupent mutuellement dans la région de détection (1).
